# EUROPEAN PATENT SPECIFICATION

(11) **EP 0 683 199 B1**
(45) Date of publication and mention of the grant of the patent: **15.03.2000**
(21) Application number: 95105831.2
(22) Date of filing: 19.04.1995
(51) Int. Cl.: C08J 11/00, B29B 17/00

(54) **Process for the recycling of waste powder coating compositions**
Verfahren zur Wiederverwendung von Pulverbeschichtungsabfällen
Procédé de recyclage de déchets de compositions pulvérulentes pour revêtement

(30) Priority: 22.04.1994 EP 94870071
(43) Date of publication of application: 22.11.1995
(73) Proprietor: FINA RESEARCH S.A., B-7181 Seneffe (Feluy) (BE)
(72) Inventor: Zeeuwe, Léon Joseph Gerard, NL-1013 JH Amsterdam (NL); de Jong, Evert Sjoerd, NL-7721 DL Dalfsen (NL); Verwey, Edwin, NL-2332 ZP Leiden (NL)

(56) References cited:
- EP-A- 0 227 029
- DE-A- 4 028 567
- DE-A- 4 240 285
- US-A- 3 752 631
- US-A- 3 883 624
- Produc Finishing, August 1988, K.Craine, "The Management of Powder Recovery"
- VOM-INSURTEC Colloquium, 220391, P.G.de Lange "Re-use of powder coating waste"

## Description

The present invention relates to a process for the recycling of waste powder coating compositions. More particularly, it relates to the use of an agglomeration step in the recycling of waste powder coating compositions

Waste powder coating compositions (hereinafter waste powders or waste powder coatings) as used herein are waste powders obtained during the preparation or application of powder coating compositions.

Waste powders are obtained at various stages. An important source of waste powder is found during preparation of the powder : the fines left after the separation step (usually by cyclone extraction) cannot be used as powder coating (if only because they block the spraying lines). Recycling of the oversprayed powder during application is generally possible to a certain extent; it is nevertheless another important source of waste powder : indeed, after separation (usually by cyclone extraction), it contains an excess of fines which are not to be re-used for high-quality coating. Further, it is generally contamined (e.g. with other colours). A discussion of waste formation may be found in a paper by K. Craine (Product Finishing, August 1988, pages 18 ff.).

As landfilling or incineration are less and less acceptable to dispose of the waste powder, there is thus a need to find uses for waste powders.

Many options have already been investigated (see e.g. the communication on "Re-use of powder coating waste", VOM-INSURTEC Colloquium, Ghent, 22.03.91).

The use as binder in conventional solvent-based paint compositions is contrary to the philosophy of reducing solvent emission. The use of water to prepare a so-called "aqueous powder slurry" is limited by the low stability of the suspension.

It has also been proposed to use waste powder as binder to prepare various building materials from inert waste material (see e.g. NL-9200479-A).

The above uses are however of less economic interest than the recycling of waste powders as (or in) fresh powder coating compositions. The above cited paper by K. Craine also contains a review of powder recovery techniques.

The direct recycling of waste powder is possible but subject to stringent conditions and limited to second-rate uses, such as primer coatings in two-layer systems or as coatings in less-demanding applications (e.g. for warehouse scaffoldings).

Recycling waste powder as feed material in the production of powder coatings has also been investigated as e.g. in DE-4028567-A; it is however limited to a few percents (depending i.a. on the powder composition) and thus does not suffice for the recycling of all waste powders. Further, powders prepared partly with recycled waste tend to give more defects in the final coatings.

There is thus a need in the art of an improved process for the true recycling of waste powders into first-grade powder coating compositions.

One of the main problems for the recycling of waste powder lies in the feeding of said powder into an extruder. Technical solutions are known to that problem, but they require very expensive apparatuses, particularly when fines are concerned. Another main problem lies in the reduction of the extruder throughput when fines are extruded, even as a small percentage of the feed.

There is thus a need in the art for an improved process for the recycling of waste powders, particularly of fines, into fresh powder coating compositions.

It is an object of the invention to provide an improved process for waste powder recycling.

Another object of the invention is to provide a process for the recycling of waste powder fines.

A further object of the invention is to provide an improved process for returning waste powder into an extruder.

Still another object of the invention is to provide a process for extruding waste powder with an increased throughput.

According to the invention, there is provided a process for the recycling of waste powder, comprising the steps of :
(a) introducing the waste powder into an extruder, said waste powder being used either as sole feedstock or in addition to feedstock components as required to prepare fresh powder;
(b) extruding the feedstock into a homogeneous extrudate; and
(c) transforming the extrudate into a first-grade powder coating composition;
characterised in that it comprises the additional preliminary steps of :
(i) forming a layer of waste powder; and
(ii) subjecting the said layer to heat, at least up to coalescence of the powder but below the decomposition or cross-linking of any part of the composition.

The layer of waste powder may be formed by any means. It is however preferred to deposit a layer of powder on transportation means such as a transportation belt. To obtain an even layer of powder, it is most preferred to use a vibrating hopper. The layer may be as thin as 0.1 mm and as thick as 1 cm, but practical considerations lead to layers of 1 to 6 mm, preferably of 2 to 4 mm thickness.

The heating of the powder layer may be done by any heating means. According to an embodiment of the invention, the powder is pressed and heated from one or both sides, preferably pressed between a heated roll and the transportation belt or between heated rolls. According to another embodiment, the powder is passed through a heating area, preferably through a furnace. According to a preferred embodiment of the invention, the powder is heated by infrared light, most preferably by infrared lamps.

US-A-3752631 discloses the recovery of thermoplastic foam scrap as extrudable granules by grinding the scrap, passing it over a vibrating cooled trough, applying radiant heat to the scarp, colling and grinding to provide an extrudable pellet or particle.

US-A-3883624 discloses the recovery and utilization of foamed thermoplastic scrap in the production of foamed products, comprising producing particles of a size suitable for extrusion.

Once the means for practising the invention have been selected, one skilled in the art will easily determine the operating conditions (heating time, heating temperature, pressure, etc, as may be applicable).

The coalesced material is then transformed into larger, relatively permanent masses, having the shape of irregular granules or pellets (hereinafter granules). This generally requires a grinding step, although by carefully selecting the operating conditions in certain embodiments, it is possible to obtain a coalesced material self-transforming into granules (e.g. upon discharge from a transportation belt).

The granules are then recycled in the process for producing first-grade powder coating compositions. The Applicants have surprisingly found that, while fines or overspray could only be recycled to a very limited extent (often with a strong reduction in the production rate and with problems in the quality of the resulting coatings), use of the granules proved to be possible to a large extent (up to the recycling of pure granules) and without any quality problems. When the waste powder is reintroduced into an extruder in addition to feedstock components (i.e. raw materials as required to prepare fresh powder), it has been observed that addition of the granules unexpectedly allow to increase extrusion throughput in comparison to addition of the powder as recovered for recycling. One of the advantages of the process of the invention is that there is however no need to mix the granules with feedstock components, i. e. that waste powder (particularly production fines) can be transformed into first-grade powder coatings.

The process for production of powder coatings compositions is well-known in the art and need not be described herein. Reference is e.g. made to the following books :
- Powder Coatings, T.A. Misev, Wiley, 1991 (particularly Chapter 5);
- Surface Coatings, S. Paul, Wiley, 1985 (particularly Chapter 8.4);
- Surface Coatings, vol. 2, OCCA, TAFE Educational Books, 1984 (particularly Chapter 42);
- The Science of Powder Coatings, D.A. Bate, SITA Technology, London, 1990.

The process of the invention is applicable to the recycling of any powder coating composition. As far as mixtures of two or more compositions are concerned, their compatibility should be evaluated first.

The present invention also discloses the apparatus to be used for performing the agglomeration process steps of the invention. The apparatus comprises means for forming a layer of waste powder, means to heat the said layer, means to transform the coalesced material into granules, and means to transport the granules into the means for producing first-grade powder compositions. In addition, there are provided, as may be applicable, means to transport the layer of waste powder through the area where it is subjected to heat and/or means to recover the coalesced material. The apparatus preferably operates continuously.

Figure 1 is a schematic view of an apparatus in accordance with an embodiment whereby the powder layer is pressed between a heating roll and a conveyor belt.

Figure 2 is a schematic view of another such apparatus in accordance with another embodiment whereby the powder layer is heated by infrared lamps.

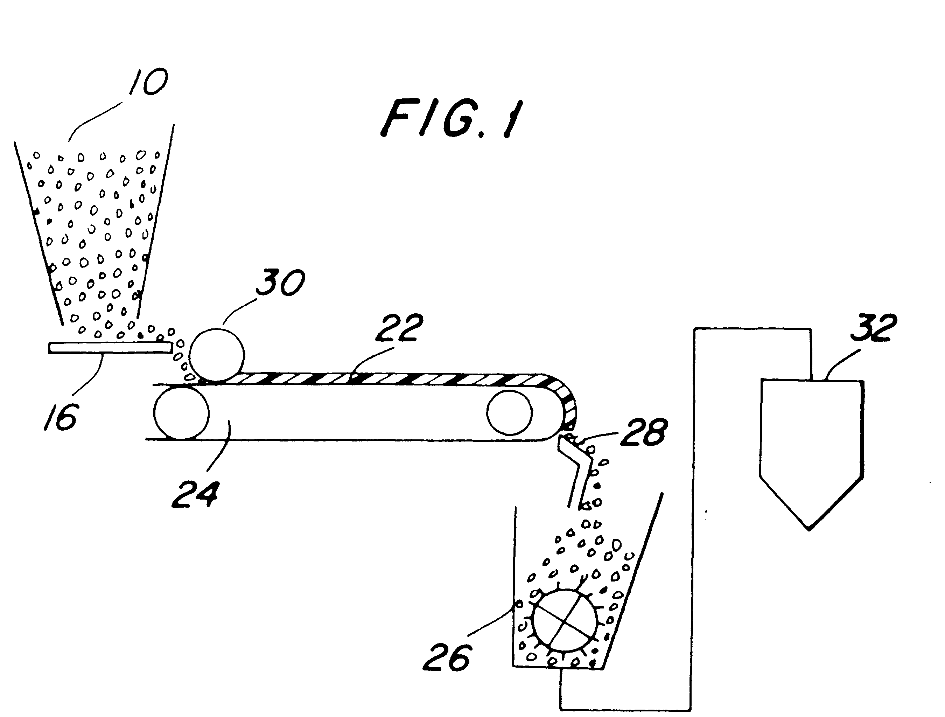

Referring to Figure 1, waste powder is introduced into hopper 10 and dispersed uniformly onto an upper plate 16. Uniformity of dispersion of the powder is obtained by using means well known by those skilled in the art; for the purpose of this embodiment, there is shown a vibrating plate 16. The waste material is transported onto a conveyor belt 24, the rate of flow being controlled by varying e.g. the vibration amplitude or frequency or both. Once upon the conveyor belt 24, the waste powder is pressed by a heating roller 30 to form a layer of coalesced powder 22. At the end of the belt 24, a scraper 28 removes the coalesced material which falls into a grinder 26 wherein it is transformed into granules. The granules may then be recovered and sent to a storage tank 32.

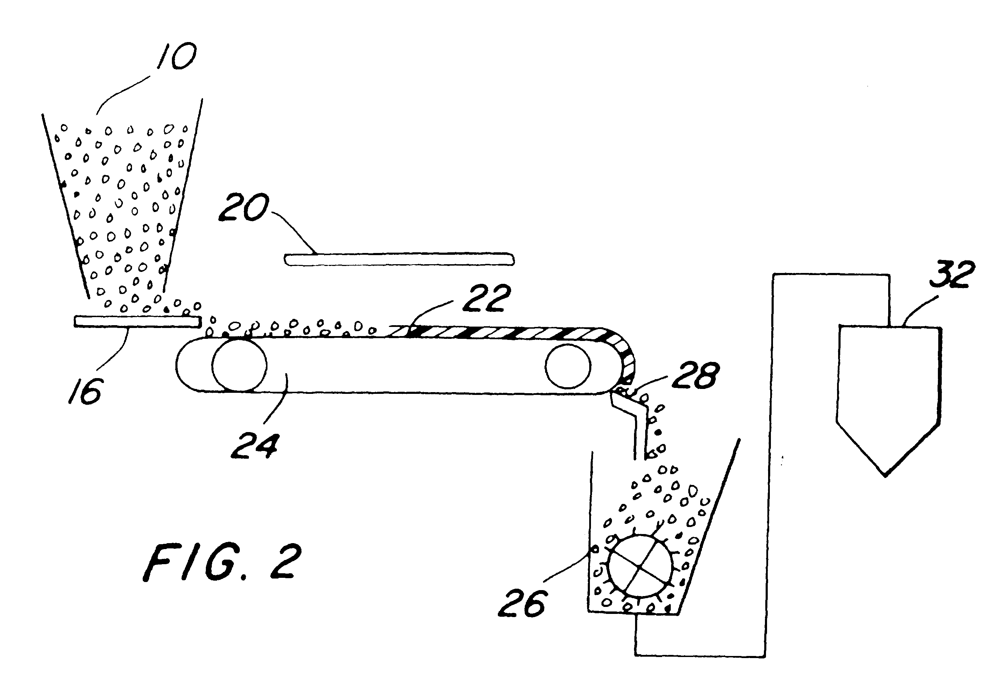

Referring now to Figure 2, waste powder is introduced into hopper 10 and dispersed uniformly onto an upper vibrating plate 16. The layer of waste material is transported onto a conveyor belt 24, above which are positioned infrared heating means 20. The powder coalesces into a layer 22 which is scraped off the belt 24 by a scraper 28. The coalesced material falls into a grinder 26 wherein it is transformed into granules. The granules may then be recovered and sent to a storage tank 32.

The following examples are provided to exemplify the invention.

### Examples 1 and 2

The following white powder composition was used :
- 30 wt% epoxy resin produced from bisphenol A and epichlorhydrin and having an epoxy content of about 1350 mmol/kg, a molecular weight of about 1500 and a viscosity of about 3.5 Pa.s at 150°C and 0.7 Pa.s at 175°C;
- 30 wt% saturated carboxylated polyester resin having an acid number of about 77 and a viscosity of about 1.3 Pa.s at 165°C;
- 1.5 wt% additives;
- 38.5 wt% pigments and extenders.

The regular powder had the following particle distribution :
10 vol.% below 10 um
50 vol.% below 35 um
90 vol.% below 70 um

Both fines obtained during production (example 1) and waste powder obtained during application (example 2) have been collected. The chemical compositions of the waste powder was not checked for contamination. They had a particle distribution as follows :

| Example 1 | Example 2 |
|---|---|
| 10 vol.% below 1 um | 10 vol.% below 1.5 um |
| 50 vol.% below 3 um | 50 vol.% below 7 um |
| 90 vol.% below 7 um | 90 vol.% below 18 um |
| | 100 vol.% below 190 um |

The waste powders were each heated by an apparatus essentially according to Fig. 2, using infrared lamps placed at 36 cm of the powder layer and irradiating a surface of 14 cm width and 28 cm length. The infrared lamps had a nominal rating of 220 V and 8000 W and were used at 30 % of the maximum voltage.

Layers of about 6 mm of each powder were laid (separately) on the conveyor belt which moved at a speed of 14 cm/min. After heating, the powders had coalesced throughout; they were then coarsely ground and returned as feed material to the extruder used to prepare fresh powder coating of the above-mentioned composition.

The addition of 20 wt.% granules in the extruded product had practically no influence on the rate of extrusion in the following conditions, as well for the granules from production fines (example 1) as for that from waste powder obtained during application (example 2) :
- barrel temperature : 130'C
- screw temperature : 70'C
- rotation speed : 150 rpm
- screw length/diameter ratio : 7
- extrusion rate : 1.4 kg/min.

After grinding and sieving, the respective powders were applied on 1 mm thick cold-rolled steel plates (with FePO₄ pre-treatment) and baked 8 minutes at 200°C (object temperature) to give coatings about 75 um thick : the resulting coatings had no defects.

The examples above clearly show the advantages of the process and apparatus to be use in the present invention.

### Comparative examples A and B

Waste powders obtained during production (Comp. Ex. A) and during application (Comp. Ex. B), as described respectively in examples 1 and 2, were directly returned as feed material to the extruder used to prepare the fresh powder coating composition.

The following rates of extrusion were observed as well in comparative example A as in comparative example B, in function of the amount of waste powder added, the extrusion conditions being as described for examples 1 and 2 :

| | |
|---|---|
| 0 wt.% waste powder | 1.4 kg/min |
| 5 wt.% | 1.3 kg/min |
| 10 wt.% | 1.15 kg/min |
| 15 wt.% | 0.9 kg/min |
| 20 wt.% | 0.4 kg/min |

After grinding and sieving, the powders were used to prepare coatings, still as described for examples 1 and 2. The resulting coatings were of the same quality as those prepared in examples 1 and 2 respectively.

Those comparative examples demonstrate that the process of the invention is advantageous over the prior art.

## Claims

1. Process for the recycling of waste powder coating compositions, comprising the steps of :
(a) introducing the waste powder into an extruder, said waste powder being used either as sole feedstock or in addition to feedstock components as required to prepare fresh powder;
(b) extruding the feedstock into a homogeneous extrudate; and
(c) transforming the extrudate into a first-grade powder coating composition;
characterised in that it comprises the additional preliminary steps of :
(i) forming a layer of waste powder; and
(ii) subjecting said layer to heat, at least up to coalescence of the powder but below the decomposition or cross-linking of any part of the composition.

2. Process according to claim 1, wherein said layer is formed on a conveyor belt.

3. Process according to either of claims 1 and 2, wherein said layer has a thickness of from 0.1 to 10 mm.

4. Process according to any one of claims 1 to 3, wherein said layer has a thickness of from 2 to 6 mm.

5. Process according to any one of claims 1 to 4, wherein said layer is subjected to heat by the use of means selected from heated rolls, infrared lamps and furnaces.

6. Process according to any one of claims 1 to 5, wherein said heating step is followed by a step of transforming the coalesced powder into granules by grinding.

7. Use for the treatment of waste powder coating compositions of an apparatus comprising :
(i) means for forming a layer of waste powder;
(ii) optionally, means for transporting the layer of waste powder;
(iii) means for heating the layer of waste powder up to coalescence but below the decomposition or cross-linking of any part thereof;
(iv) optionally, means to recover the coalesced material;
(v) means to transform the coalesced material into granules; and (vi) means to transport the granules into (vii) means for producing first-grade powder coating compositions.

8. Use according to claim 7, wherein said heating means are selected from heated rolls, infrared lamps and furnaces.

## Patentansprüche

1. Verfahren für das Recycling von Abfallpulverüberzugszusammensetzungen, umfassend die Stufen von:
(a) Einführen des Abfallpulvers in einen Extruder, wobei das Abfallpulver entweder als Alleineinsatzmaterial oder zusätzlich zu Einsatzmaterialkomponenten, wie benötigt, zum Herstellen von frischem Pulver verwendet wird,
(b) Extrudieren des Einsatzmaterials in ein homogenes Extrudat und
(c) Umwandeln des Extrudats in eine Erstgrad-Pulverüberzugszusammensetzung, dadurch gekennzeichnet, daß es die zusätzlichen Vorstufen umfaßt von: (i) Bilden einer Abfallpulverschicht und (ii) Aussetzen der Schicht Hitze mindestens bis zur Koaleszenz des Pulvers aber unterhalb der Zersetzung oder Vernetzens irgendeines Teils der Zusammensetzung.

2. Verfahren nach Anspruch 1, wobei die Schicht auf einem Förderband gebildet wird.

3. Verfahren nach einem der Ansprüche 1 und 2, wobei die Schicht eine Dicke von 0,1 bis 10 mm hat.

4. Verfahren nach einem der Ansprüche 1 bis 3, wobei die Schicht eine Dicke von 2 bis 6 mm hat.

5. Verfahren nach einem der Ansprüche 1 bis 4, wobei die Schicht Hitze durch die Verwendung von Mitteln, ausgewählt aus Heizwalzen, Infrarotlampen und Brennöfen, ausgesetzt wird.

6. Verfahren nach einem der Ansprüche 1 bis 5, wobei die Heizstufe von einer Stufe des Umwandelns des koaleszierten Pulvers in Granalien durch Mahlen gefolgt wird.

7. Verwendung für die Behandlung von Abfallpulverüberzugszusammensetzungen einer Vorrichtung, umfassend:
(i) Mittel zum Bilden einer Abfallpulverschicht,
(ii) wahlfrei Mittel zum Transportieren der Abfallpulverschicht,
(iii) Mittel zum Erhitzen der Abfallpulverschicht bis zur Koaleszenz aber unterhalb der Zersetzung oder Vernetzens irgendeines Teils davon,
(iv) wahlfrei Mittel zum Gewinnen des koaleszierten Materials,
(v) Mittel zum Umwandeln des koaleszierten Materials in Granalien und
(vi) Mittel zum Transportieren der Granalien in
(vii) Mittel zum Herstellen von Erstgrad-Pulverüberzugszusammensetzungen.

8. Verwendung nach Anspruch 7, wobei die Heizmittel aus Heizwalzen, Infrarotlampen und Brennöfen ausgewählt sind.

## Revendications

1. Un procédé de recyclage des déchets de compositions pulvérulentes pour revêtement comprenant les étapes de:
(a) introduire le déchet pulvérulent dans une extrudeuse, ce déchet pulvérulent étant utilisé soit comme unique de charge d'alimentation ou ajouté à des composants de charge d'alimentation selon les nécessités pour préparer une nouvelle poudre;
(b) extruder la charge d'alimentation en un extrudat homogène; et
(c) transformer l'extrudat en une composition pulvérulente pour revêtement de première qualité;
caractérisé en ce qu'il comprend les étapes préliminaires supplémentaires de:
(i) former une couche de déchet pulvérulent; et
(ii) soumettre cette couche à la chaleur, au moins jusqu'à agglomération de la poudre mais inférieure à la décomposition ou de la réticulation de toute partie de la composition.

2. Procédé selon la revendication 1, où cette couche est formée sur une courroie de convoyeur.

3. Procédé selon l'une quelconque des revendications 1 et 2, où cette couche a une épaisseur de 0,1 à 10 mm.

4. Procédé selon l'une quelconque des revendications 1 à 3, où cette couche a une épaisseur de 2 à 6 mm.

5. Procédé selon l'une quelconque des revendications 1 à 4, où cette couche est soumise à la chaleur par l'utilisation d'un dispositif choisi parmi des cylindres chauffés, des lampes infrarouges et des fours.

6. Procédé selon l'une quelconque des revendications 1 à 5, où cette étape de chauffage est suivie par une étape de transformation de la poudre agglomérée en granules par broyage.

7. Utilisation pour le traitement de déchets de compositions pulvérulentes pour revêtement, d'un appareil comprenant:
(i) un dispositif pour former une couche de déchet pulvérulent;
(ii) facultativement, un dispositif pour transporter la couche de poudre pulvérulente;
(iii) un dispositif pour chauffer la couche de poudre pulvérulente de jusqu'à agglomération mais inférieure à la décomposition ou réticulation de toute partie de celle-ci;
(iv) facultativement, un dispositif pour récupérer la matière agglomérée;
(v) un dispositif pour transformer la matière agglomérée en granules; et
(vi) un dispositif pour transporter les granules dans
(vii) des dispositifs pour produire des compositions pulvérulentes pour revêtement de première qualité.

8. Utilisation selon la revendication 7, dans laquelle le dispositif de chauffage est choisi parmi des cylindres chauffés, les lampes infrarouges et les fours.
